# EUROPÄISCHE PATENTSCHRIFT

(11) **EP 1 817 082 B1**
(45) Veröffentlichungstag und Bekanntmachung des Hinweises auf die Patenterteilung: **20.02.2019**
(21) Anmeldenummer: 05815279.4
(22) Anmeldetag: 30.11.2005
(51) Int. Cl.: A62B 9/04

(54) **KUPPLUNG FÜR ATEMSCHUTZGERÄTE**
COUPLING FOR RESPIRATORY PROTECTIVE DEVICES
SYSTEME D'ACCOUPLEMENT POUR APPAREILS DE PROTECTION RESPIRATOIRE

(30) Priorität: 30.11.2004 DE 102004057917
(43) Veröffentlichungstag der Anmeldung: 15.08.2007
(73) Patentinhaber: Parker Hannifin Manufacturing Sweden AB, 501 78 Boras (SE)
(72) Erfinder: WITT, Stefan, 71735 Eberdingen (DE); SIMON, Horst, 51643 Gummersbach (DE)
(74) Vertreter: Rüger Abel
(86) Internationale Anmeldenummer: PCT/EP2005/012751
(87) Internationale Veröffentlichungsnummer: WO 2006/058712

(56) Entgegenhaltungen:
- DE-A1- 4 208 009
- US-A- 2 896 971
- US-A- 4 447 040
- US-A1- 2003 145 892
- US-B1- 6 382 251

## Beschreibung

Atemschutzgeräte, beispielsweise für Feuerwehrleute, bestehen aus einem am Körper angeschnallten Traggestell an dem der Lungenautomat befestigt ist. Von dem Lungenautomat gehen Atemschläuche zu einem Mundstück, das der Feuerwehrmann im Einsatzfall im Mund trägt.

Die Atemluft kommt aus einer Pressluftflasche in einem konstruktiven Volumen von ca. 6 Litern. Um ein genügendes Volumen zu speichern ist die Luft in der Flache auf ca. 300 bar verdichtet.

Die Atemluftverbindung von der Flasche zu dem Lungenautomaten ist trennbar. Auf diese Weise kann die Atemluftflasche am Einsatzfahrzeug gefahrlos wieder gefüllt werden. Die gefüllte Flasche wird am Traggestell befestigt und strömungsmäßig mit dem Lungenautomaten verbunden.

Diese Verbindung sollte relativ schnell gehen um Zeitverlust zu vermeiden. Außerdem muss die Verbindung einfach handhabbar sein. Jede komplizierte Handhabung würde eine potentielle Gefahrenstelle bilden.

Die Pressluftflasche ist mit einem eigenen Handventil versehen, damit das Anschließen der Pressluftflasche sowohl an die Pumpe als auch an den Lungenautomaten druckfrei erfolgen kann, dies vereinfacht wesentlich die erforderlichen Kupplungen.

Andererseits sollte zweckmäßigerweise sichergestellt sein, dass ein versehentliches Betätigen des Flaschenventils nicht zu einem unzulässigen Druckaufbau in Teilen der betreffenden Kupplungseinrichtung führen kann, weil sonst ein späterer Anschluss unmöglich wäre.

Beim Öffnen des Flaschenventils sollte auch keine gefährliche Luftströmung entstehen.

Weitere Anforderungen an die Verbindungsstelle sind Sicherheit gegen Eindringen von Fremdkörpern bei getrennter Kupplung sowie Verhindern eines Druckaufbaus bei versehentlich geöffnetem Flaschenventil.

DE 42 08 009 A1 offenbart eine Schnellverschlusskupplung mit einem Buchsenteil und einem Stecknippel. Der Buchsenteil weist einen Grundkörper, der einen Durchgangskanal aufweist, und eine in dem Grundköper verankerte Führungshülsenanordnung, die in Verlängerung des Durchgangskanals vorgesehen ist und ein von dem Grundkörper abliegendes Einsteckende aufweist. Der Buchsenteil weist ferner einen in der Führungshülsenanordnung vorgesehenen Stößel auf, der bis in die Nähe des Einsteckendes reicht, in der Nähe des Einsteckendes einen Kopf trägt und mit der Führungshülsenanordnung einen Ringraum begrenzt, der mit dem Durchgangskanal ständig strömungsmäßig in Verbindung steht. Der Buchsenteil weist ferner Halteglieder auf, die mittels einer Feder gegen eine Ringnut des Stecknippels vorgespannt sind, um darin einzurasten und den Stecknippel festzuhalten, wenn dieser in den Buchsenteil eingesteckt ist. Der Buchsenteil weist ferner eine Verriegelungshülse in Form eines Auslöserings auf, der die federvorgespannten Halteglieder umschließt, drehend gelagert ist und Nasen enthält, die bei einer Drehung des Auslöserings die Halteglieder anheben können, so dass der Stecknippel freigegeben wird und axial herausgezogen werden kann.

US 2003/0145892 offenbart eine Schnellverschlussfluidkupplung mit einem Buchsenteil und einem Stecker für den Buchsenteil, wobei der Stecker die Merkmale des Oberbegriffs des unabhängigen Anspruchs 28 aufweist.

Ausgehend hiervon ist es Aufgabe der Erfindung eine Kupplungsanordnung für Atemschutzgeräte zu schaffen, die die oben erwähnten Bedingungen, zumindest zum Teil, erfüllt.

Diese Aufgabe wird erfindungsgemäß durch einen Buchsenteil mit den Merkmalen des Anspruches 1 bzw. einen Stecker mit den Merkmalen des Anspruches 28 gelöst.

Konkrete konstruktive Ausgestaltungen ergeben sich aus den weiteren Unteransprüchen.

Der Buchsenteil gemäß der Erfindung weist einen Grundkörper, der einen Durchgangskanal aufweist, und eine in dem Grundköper verankerte Führungshülsenanordnung auf, die in Verlängerung des Durchgangskanals vorgesehen ist und ein von dem Grundkörper abliegendes Einsteckende aufweist. Der Buchsenteil weist ferner einen in der Führungshülsenanordnung vorgesehenen Stößel auf, der bis in die Nähe des Einsteckendes reicht, in der Nähe des Einsteckendes einen Kopf trägt und mit der Führungshülsenanordnung einen Ringraum begrenzt, der mit dem Durchgangskanal ständig strömungsmäßig in Verbindung steht. Der Buchsenteil weist ferner Halteglieder auf, die in Öffnungen der Führungshülsenanordnung geführt sind. Der Buchsenteil weist ferner eine Verriegelungshülse auf, die zwischen einer Verriegelungsstellung und einer Freigabestellung in axialer Richtung hin und her verschiebbar sowie in Umfangsrichtung verdrehbar ist. Der Buchsenteil weist ferner eine Vorspannfeder auf, durch die die Verriegelungshülse in die Verriegelungsstellung axial vorspannbar ist und in eine Drehstellung vorspannbar ist, wobei entweder der Grundkörper und/oder die Führungshülsenanordnung ein Widerlager für die Vorspannfeder aufweisen bzw. aufweisen, die andernends an der Verrieglungshülse angreift.

Die erfindungsgemäße Anordnung ermöglicht es, für den eigentlichen Entkupplungsvorgang eine Axialverschiebung der Verriegelungshülse vorzusehen. Eine solche Axialbewegung ist relativ einfach handhabbar. Damit jedoch nicht versehentlich eine solche Axialbewegung erfolgt, wenn der Feuerwehrmann an irgendwelchen Stellen mit der Kupplung hängen bleibt, ist bei eingestecktem Stecker die Axialbewegung der Verrieglungshülse nur möglich, nachdem sie in eine bestimmte Drehstellung gebracht ist. Hierdurch erhöht sich die Sicherheit der Kupplung erheblich.

Bei dem neuen Buchsenteil der Fluidkupplung ist vorzugsweise eine Drosseleinrichtung vorgesehen, die durch das Einstecken des Steckers gesteuert wird. Bei gezogenem Stecker zeigt die Drosseleinrichtung einen hohen Strömungswiderstand, ohne jedoch den Strömungsweg durch den Kupplungsteil abzusperren. Dadurch wird ein unerwünschter Druckaufbau im Buchsenteil vermieden, wenn dieser an der Pressluftflasche angeschlossen ist und versehentlich das Flaschenventil geöffnet wird.

Andererseits führt ein Öffnen des Flaschenventils nicht zu einem gefährlichen Druckluftausstoß, weil die Drosseleinrichtung mit hohem Strömungswiderstand die austretende Luftmenge auch bei 300 bar Druck in der Flasche wirksam beschränkt.

Bei gekuppelter Kupplung, d.h. bei im Buchsenteil eingestecktem Stecker, ist hingegen die Drosseleinrichtung praktisch unwirksam und beschränkt nicht mehr den Luftfluss aus der Pressluftflasche zu dem Lungenautomaten.

Wenn hingegen die Anordnung so getroffen ist, dass nicht das Buchsenteil mit der Pressluftflasche verbunden ist, sondern der Stecker, befindet sich die Drosseleinrichtung im Stecker und wird dort von dem Buchsenteil gesteuert.

Gemäß einem wichtigen Aspekt der Erfindung sind der Stecker bzw. der Buchsenteil besonders beschaffen, so dass sie gegen das Eindringen von Fremdkörpern geschützt sind.

Insbesondere weist der Buchsenteil in einer bevorzugten Ausführungsform den Grundkörper auf, durch den der Durchgangskanal für das Fluid hindurchführt. Der Grundkörper trägt die daran verankerte Führungshülsenanordnung, mit der eine Reihe weiterer Konstruktionselemente des Buchsenteils geführt sind. Diese Führungshülsenanordnung bildet somit in gewisser Weise auch einen Grundkörper des Buchsenteils, wobei sie ein von dem eigentlichen Grundkörper abliegendes Einsteckende mit einer dort befindlichen Mündung aufweist. Innerhalb der Führungshülsenanordnung befindet sich der Stößel, der bei zusammengesteckter Kupplung dazu dient, ein Füllstück in dem eingesteckten Stecker zurückzustoßen, damit die Strömungsverbindung durch die gesteckte Kupplung hindurch mit möglichst geringem Strömungswiderstand erfolgt. Der Stößel des Buchsenteils setzt sich aus einem Halsteil und einem daran sitzenden Kopf zusammen. Zwischen der Führungshülsenanordnung und dem Kopf des Stößels entsteht notwendigerweise ein Spalt, der bei gesteckter Kupplung ein Einsteckende des Steckers aufnimmt. Damit dieser Spalt bei entnommenem Stecker keine Fremdpartikel aufsammeln kann, ist eine Verschlusshülse vorgesehen, die den Ringspalt weitgehend mechanisch abdichtet. Dabei ist jedoch weiterhin eine Luftdurchlässigkeit gegeben, damit sich hinter der Verschlusshülse kein Druck aufbauen kann. Ein solcher Druck würde sonst das Einstecken des Steckers blockieren oder zumindest stark erschweren.

Die Verschlusshülse wird mit Hilfe einer Vorspanneinrichtung in Richtung auf eine Verschlussstellung des Ringspalts vorgespannt.

Außerdem weist der Buchsenteil Mittel auf, die dazu eingerichtet sind, bei entnommenem Stecker eine gedrosselte Fluidverbindung zwischen dem Durchgangskanal im Grundkörper und der Außenatmosphäre herzustellen.

Diese Mittel können, wie in den Unteransprüchen angegeben, darin bestehen, dass eine gegebenenfalls vorhandene Kuppelhülse nicht abdichtend an der dem Grundkörper zugekehrten Seite des Kopfes des Stößels anliegt. Damit kann sich der Raum innerhalb der Kuppelhülse zur Außenatmosphäre hin entlüften und den eventuell entstandenen Druck abbauen.

Die Führungshülsenanordnung ist am einfachsten im Gründkörper zu befestigen, wenn dieser ein entsprechendes Innengewinde aufweist.

Zur Verrieglung des eingesteckten Steckers sind Verriegelungsglieder vorgesehen, die in Bohrungen der Führungshülsenanordnung in der Nähe von deren Einsteckende angeordnet sind.

Um Vorspannmittel, insbesondere für die Verschlusshülse, unterzubringen, enthält die Führungshülsenanordnung vorzugsweise eine innere und eine äußere Führungshülse, die zwischen sich einen entsprechenden Ringspalt begrenzen.

Die innere Führungshülse endet an einem Boden, der wenigstens eine in Längsrichtung der inneren Führungshülse verlaufende Bohrung aufweist, die als Strömungskanal dient, über die das Innere der inneren Führungshülse mit dem Durchgangskanal strömungsmäßig in Verbindung steht. Dadurch kann der Boden der inneren Führungshülse gleichzeitig auch als Befestigungsstelle für den Stößel dienen. Die Durchgangsbohrung mündet dabei seitlich neben dem Stößel.

Im Falle der Verschlusshülse zum Verschließen des Spaltes für das Einsteckende des Steckers setzt sich diese zweckmäßigerweise aus einem zylindrischen Kragen und einem radial nach innen ragenden Bund zusammen. Mit einem weiteren, nach außen stehendem Kragen, kann die Verschlusshülse mit der äußeren Führungshülse zusammenwirken, um den Hub in Richtung auf das Einsteckende zu begrenzen.

Der Durchmesser des zylindrischen Kragens ist derart auf die Führungshülsenanordnung abgestimmt, dass er in den Ringraum zwischen der äußeren und der inneren Führungshülse eintauchen kann.

Um eine leckagedichte Kupplung zwischen dem Buchsenteil und dem Stecker herzustellen, ohne dass ein nennenswerter Strömungswiderstand entsteht, befindet sich im Innenraum, wie er durch die Führungshülsenanordnung begrenzt ist, eine Kupplungshülse. Diese Kupplungshülse ist längsverschieblich in der Führungshülse geführt. Ihr Hub in Richtung auf das Einsteckende ist durch die Anlage an dem Stößel begrenzt.

Diese Anlagefläche ist vorteilhafterweise nicht dicht, so dass sich kein Druck im Inneren der Buchse aufbauen kann.

Im Falle der beweglichen Kuppelhülse ist eine Vorspanneinrichtung vorgesehen, um die Kuppelhülse in Richtung auf das Einsteckende, bzw. in Richtung auf den Kopf des Stößels vorzuspannen.

Zur Betätigung der Kuppelhülse ist an dieser ein Bund vorgesehen, der mittelbar mit dem freien Ende des Steckers zusammenwirkt, um die Kuppelhülse entsprechend zu verschieben, sobald sie vollständig mit dem Stecker und den dort vorhandenen Dichtmittel in Eingriff steht.

Zum Verriegeln des Steckers ist an der Buchse die Verriegelungshülse vorgesehen, die die Bewegung der Halte- bzw. Verriegelungsglieder steuert. Die Verriegelungshülse sitzt auf der Außenseite der Führungshülsenanordnung und ist dort in axialer sowie in Umfangsrichtung bewegbar.

Um den Hub der Verriegelungsglieder wahlweise zu vergrößern oder einzuschränken, enthält die Verriegelungshülse eine umlaufende Ringnut.

Durch die Vorspannfeder, die an der Führungshülse angreift, kann die Führungshülse in axialer Richtung und in Umfangsrichtung vorgespannt werden.

Um einen zu großen Hub der Verriegelungshülse zu vermeiden, kann eine mit der Verriegelungshülse verbundene Griffhülse entsprechende Anschläge aufweisen, die mit Anschlägen an dem Grundkörper zusammenwirken.

Damit die Verschiebung der Verriegelungshülse im Sinne eines Freigebens des Steckers in der normalen Verriegelungsstellung blockiert ist, ist an dem Grundkörper oder an der Verriegelungshülse eine Nockenfläche vorgesehen, die mit einem an dem anderen Element vorhandenen Folgeglied in Gestalt eines Zapfens zusammenwirkt. Dadurch wird sichergestellt, dass eine Verschiebung der Hülse im Sinne eines Entriegelns des Steckers nur möglich ist, nachdem die Verriegelungshülse in die Ausgangsstellung entsprechend der Stellung ohne Stecker zurückgedreht ist. Dabei kann die Verriegelungshülse in dieser Stellung durch das Zusammenwirken der Verriegelungsglieder mit der Verschlusshülse gesperrt bleiben, bis durch einen Stecker die Verschlusshülse zurückgedrängt wird.

Der Stecker für eine Buchse einer Fluidkupplung, insbesondere für Atemschutzgeräte, gemäß der Erfindung weist einen Grundkörper mit einem Strömungskanal auf. Der Grundkörper bildet ein rohrförmiges Einsteckende mit einer endseitigen Mündung. Das Einsteckende ist dazu vorgesehen, in den Innenraum der Buchse einzudringen. In dem Einsteckende des Steckers befindet sich ein Verschlussstück, das die Mündung in der Ruhestellung des Steckers verschließt und das durch entsprechende Mittel an der Buchse zurückgedrängt werden kann, um den Strömungsweg frei zu geben. Mittels einer Vorspanneinrichtung wird das Verschlussstück in die Verschlussstellung in dem Stecker vorgespannt. Das Verschlussstück weist, im Schnitt gesehen, eine becherförmige Gestalt mit einem der Mündung benachbarten Kopf und einem davon ausgehenden Kragen auf, wobei durch den Kragen des Verschlussstücks wenigstens eine Radialbohrung hindurchführt. In der Ruhestellung des Verschlussstücks ist eine Strömungsverbindung zwischen dem Grundkörper und dem Verschlussstück dichtend verschlossen, während in der Arbeitsstellung des Verschlussstücks diese dichtende Verbindung aufgehoben ist und eine freie Durchströmung des Steckers zwischen dem Grundkörper und dem Verschlussstück sowie durch die wenigstens eine Radialbohrung hindurch ermöglicht ist.

Durch das Verschlussstück wird sichergestellt, dass bei gezogenem Stecker keine Fremdkörper in den Innenraum des Steckers und dessen Durchlasskanal gelangen können.

Da das Einsteckende des Steckers wegen der fluiddichten Abdichtung in der Buchse mit Dichtungen versehen ist, ergibt sich gegebenenfalls nicht nur eine Abdichtung gegenüber Fremdkörpern, sondern auch eine druckdichte Abdichtung.

Je nachdem ob der Stecker oder die Buchse an der Pressluftflasche angeordnet ist, kann es zweckmäßig sein, das Verschlussstück des Steckers gasdurchlässig auszubilden, um zu verhindern, dass sich an der Rückseite des Steckers ein Druck aufbauen kann bzw. dass sich ein vorhandener Druck abbauen kann.

Im Übrigen sind Weiterbildungen der Erfindungen Gegenstand von Unteransprüchen.

Beim Studium des Ausführungsbeispiels wird dem Fachmann ohne weiteres klar, dass eine Reihe von Abwandlungen möglich sind, die in seinem Belieben stehen. Insbesondere können einige der Steuerteile ihre Position an den miteinander zusammenwirkenden Teil wechseln, wie z.B. der Fühlstift und der zugehörige Nocken.

In der Zeichnung ist ein Ausführungsbeispiel des Gegenstandes der Erfindung dargestellt. Es zeigen:
- Fig. 1: eine perspektivische, teilweise aufgeschnittene, Darstellung einer erfindungsgemäßen Kupplung;
- Fig. 2: die Buchse nach Fig. 1 in einer perspektivischen Explosionsdarstellung;
- Fig. 3: den Stecker für die Buchse nach Fig. 1 in einer perspektivischen Schnittdarstellung und
- Fig. 4 und 5: das Zusammenspiel zwischen Stecker und Buchse in unterschiedlichen Betriebsstellungen.

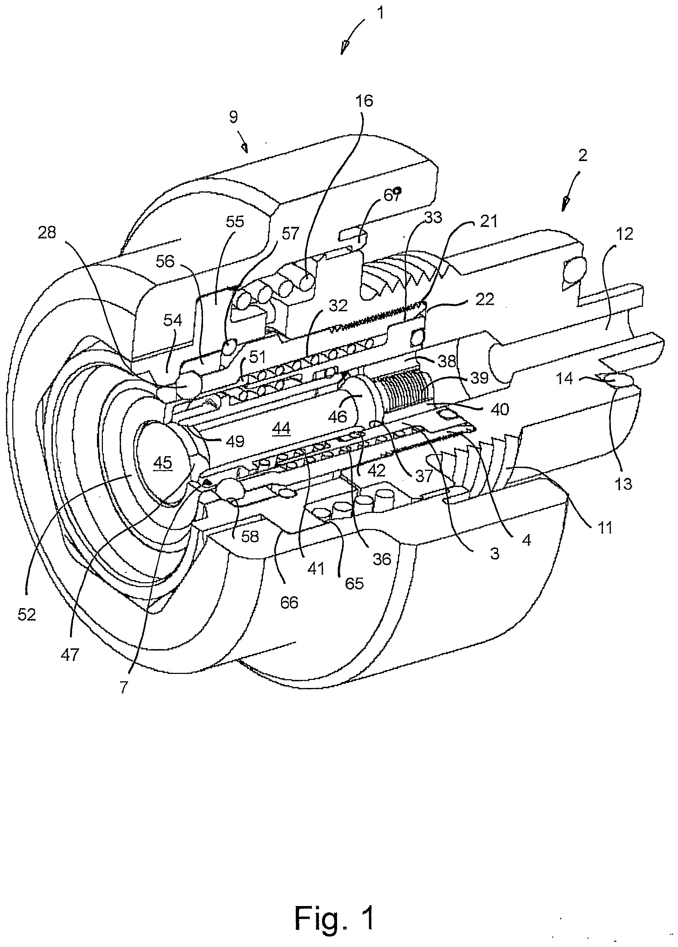

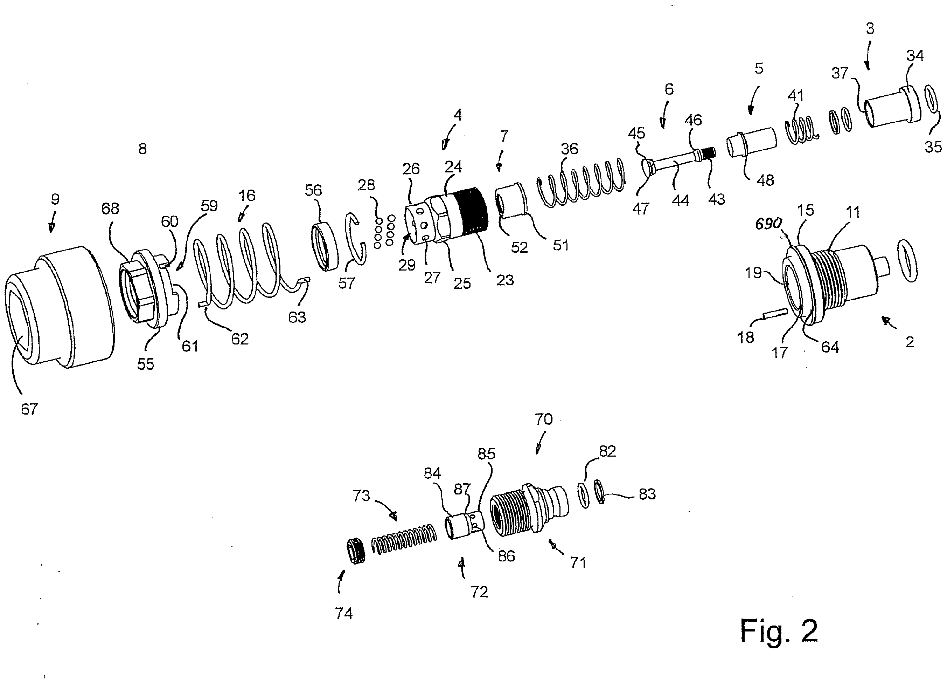

In Fig. 1 ist das erfindungsgemäße Buchsenteil 1 in einer perspektivischen Schnittdarstellung veranschaulicht, während Fig. 2 den Buchsenteil 1 in einer Explosionsdarstellung zeigt. Zu dem Buchsenteil 1 gehören ein Grundkörper 2, eine Führungshülsenanordnung, die sich aus einer inneren Führungshülse 3 sowie einer äußeren Führungshülse 4 zusammensetzt, eine Kuppelhülse 5, ein Stößel 6, eine Verschlusshülse 7, eine Verriegelungshülse 8 sowie eine Griffhülse 9.

Die äußere Führungshülse 4 ist in den Grundkörper 2 eingeschraubt. Sie dient dabei gleichzeitig als Hohlschraube zur Befestigung der inneren Führungshülse 3 in dem Grundkörper 2. Die Kuppelhülse 5 gleitet abgedichtet in der inneren Führungshülse 3, die außerdem den eingeschraubten Stößel 6 trägt. In der äußeren Führungshülse 4 ist die Verschlusshülse 7 axial gleitend geführt. Die äußere Führungshülse 4 bildet gleichzeitig die Führung für die Verriegelungshülse 8, auf der die Griffhülse 9 verankert ist.

Der Grundkörper 2 ist ein im Wesentlichen rotationssymmetrischer Körper mit einem Außengewinde 11 und einem koaxial hindurchführenden Durchlasskanal, der von einem Teil einer hindurchgehenden Stufenbohrung 12 gebildet ist. Am rückwärtigen Ende enthält der Grundkörper 2 eine die Stufenbohrung 12 umgebende Ringnut 13, in der ein O-Ring 14 sitzt. Mit Hilfe des Gewindes 11 kann der Buchsenteil 1 an einem Flaschenventil einer Pressluftflasche abgedichtet befestigt sein. Die Pressluftflasche ist die Pressluftflasche eines Atemschutzgerätes mit einem Nennvolumen von 6 bis 10 Litern, in der Luft mit einem Druck von 300 bar enthalten ist. Das Flaschenventil ist ein genormtes handbetätigtes Ventil, das, je nach Bedarf, geöffnet oder geschlossen wird.

Auf seiner Außenseite trägt der Grundkörper 2 im Anschluss an das Außengewinde 11 einen Bund 15 der als Widerlager für eine Schraubenfeder 16 dient, die mit der Verriegelungshülse 8 zusammenwirkt. Außerdem ist in dem Grundkörper 2 radial innerhalb des Bunds 15 eine Bohrung 17 enthalten, in der ein Fühlstift 18 aufgenommen ist. Der Fühlstift 18 zeigt in Längsrichtung des rotationssymmetrischen Grundkörpers 2 in Richtung auf die Verriegelungshülse 8.

Die Stufenbohrung 12 bildet an dem dem Einsteckende zugekehrten Ende des Grundkörpers 2 einen Abschnitt 19 mit vergrößertem Durchmesser, der im Grundköper 2 in ein Innengewinde 21 übergeht, das an einer geraden Ringschulter 22 endet.

In dieses Innengewinde 21 ist die äußere Führungshülse 4 eingeschraubt. Die äußere Führungshülse 4 trägt hierzu an ihrem dem Grundkörper 2 zugekehrten Ende ein entsprechendes Außengewinde 23.

Das Außengewinde 23 geht im Anschluss in eine Zylinderfläche 24 mit gleichem Durchmesser über. An den zylindrischen Abschnitt 24 schließt sich ein Sechskantabschnitt 25 mit verrundeten Ecken an. Der Sechskant 25 bildet eine luftdurchlässige Gleitlagerfläche für die Verriegelungshülse 8.

An den Sechskant 25 schließt sich ein kreisrunder rohrförmiger Fortsatz 26 der Führungshülse 24 an, der eine Reihe von Radialbohrungen 27 enthält, in denen Verriegelungskugeln 28 sitzen. Das freie Ende des zylindrischen Fortsatzes 26 bildet eine Mündung 29.

Die zylindrische Fläche 24 dient als Zentrierfläche in dem glatten Teil des Abschnittes 19 der Stufenbohrung 12.

Die innere Gestaltung der äußeren Führungshülse 4 ergibt sich aus der Darstellung nach Fig. 1. Die äußere Führungshülse 4 wird von einer zylindrischen Stufenbohrung 31 durchsetzt. Ihr Abschnitt mit dem kleinsten Durchmesser befindet sich im Bereich des rohrförmigen Fortsatzes 26 und endet etwa auf Höhe des Sechskants 25. An dieser Stelle beginnt ein Abschnitt 32 mit größerem Durchmesser, der schließlich am rückwärtigen Ende in einen Abschnitt 33 mit noch größerem Durchmesser übergeht. Der Abschnitt 33 dient als Aufnahme- und Halterungsraum für die innere Führungshülse 3.

Die innere Führungshülse 3 ist am rückwärtigen Ende mit einem radial nach außen stehenden Bund 34 versehen, der dazu eingerichtet ist, auf der Schulter 22 des Grundkörpers 2 aufzuliegen. Um den Bund 34 gegen die Schulter 22 abzudichten enthält der Bund 34 eine umlaufende Ringnut mit einer darin sitzenden O-Ringdichtung 35.

Mit der Außenfläche steckt der Bund 34 in der mit 33 der Stufenbohrung 31 und wird durch deren Abschlussschulter gegen die Schulter 22 angepresst.

Im Anschluss an den Bund 34 ist die innere Führungshülse 3, wie gezeigt, zylindrisch glatt. Ihre Länge ist so bemessen, dass sie etwa an dem dem Einsteckende bzw. der Mündung 29 benachbarten Ende des Bohrungsabschnittes 32 endet, wie dies Fig. 1 erkennen lässt. Der Durchmesser ist deutlich geringer, wodurch zwischen der Außenumfangsfläche der innere Führungshülse 3 und der Innenumfangsfläche des Bohrungsabschnittes 32 ein Ringspalt entsteht, in dem eine Druckfeder 36 sitzt.

In die innere Führungshülse 3 führt eine Sackbohrung 37 hinein, wodurch an dem Ende der inneren Führungshülse 3 das den Bund 34 trägt, ein Boden 38 verbleibt. Der Boden 38 enthält ein koaxial hindurchführendes Innengewinde 39 sowie seitlich neben der Gewindebohrung 39 eine Reihe von Durchgangsbohrungen 40. In die Gewindebohrung 39 ist der Stößel 6 eingeschraubt.

Die Sackbohrung 37 ist in der Nähe des von dem Bund 34 abliegenden Endes im Durchmesser erweitert, um dort eine Schraubendruckfeder 41 aufzunehmen. Die Schraubendruckfeder 41 wirkt zwischen der inneren Führungshülse 3 und der Kuppelhülse 5.

Außerdem enthält die Sackbohrung 37 in der Nähe ihres Bodens 38 eine umlaufende Ringnut 42 mit einem darin sitzenden O-Ring, der gegen die Kuppelhülse 5 abdichtet.

Der Stößel 6 setzt sich aus einem Gewindeschaft 43, einem Halsteil 44 und einem Kopf 45 zusammen. Der Gewindeschaft 43 ist in die Gewindebohrung 39 der inneren Führungshülse 3 fest eingeschraubt, wobei eine entsprechende Schulter 46 die Einschraubtiefe festlegt. Der Hals 44 ist so bemessen, dass sich ein erheblicher Ringspalt mit der in diesem Bereich befindlichen Kuppelhülse 5 ergibt. Der Kopf 45 ist kegelstumpfförmig, wobei der kleinere Durchmesser dem Gewindeschaft 43 zugekehrt ist. An wenigstens einer Stelle ist die am Kopf 45 vorhandene Kegelmantelfläche durch eine Abschrägung 47 abgeplattet.

Die Kuppelhülse 5 ist ein auf der Innenseite zylindrisch glattes Rohr, das auch auf der Außenseite mit Ausnahme eines dort vorhandenen Bunds 48 zylindrisch glatt ist. Der Innendurchmesser der Kuppelhülse 5 ist geringfügig größer als der Außendurchmesser der Schulter 46 des Stößels 6, damit der Stößel von vorne her in die Kuppelhülse 5 eingeführt werden kann.

Der Außendurchmesser der Kuppelhülse 5 entspricht der lichten Weite der Stufenbohrung 37 an jener Stelle, wo sich die Ringnut 42 mit dem darin befindlichen O-Ring befindet. Die Kuppelhülse 5 ist an ihrem der Mündung 25 benachbarten Ende mit einer Fasenfläche 49 versehen, die auf der Kegelmantelfläche des Kopfes 45 des Stößels 6 anliegen kann. Sie bildet dort eine Drosselstelle, zusammen mit der Abplattung 47, wenn sie mit ihrer Fasenfläche auf der Mantelfläche des kegelförmigen Kopfes 45 aufliegt.

Im montierten Zustand springt das freie Ende des Kopfes 45, wie Fig. 1 erkennen lässt, geringfügig gegenüber der Mündung 29 der äußeren Führungshülse 4 zurück. In dem Raum zwischen dem Bund 48 und dem Absatz in der inneren Führungshülse 3 sitzt die bereits erwähnte Feder 41, die die Kuppelhülse 5 in Richtung auf eine Anlage an dem Kopf 45 vorspannt.

Die Verschlusshülse 7 ist ein im Wesentlichen zylindrisches dünnwandiges Rohr, das an seinem hinteren oder innen liegenden Ende einen radial nach außen vorspringenden Bund 51 und an seinem vorderen der Mündung 29 benachbarten Ende einen radial nach innen ragenden Bund 52 trägt. Der radial nach außen zeigende Bund 51 läuft in dem Bohrungsabschnitt 32 der äußeren Führungshülse 4 und somit in dem Ringspalt, der zwischen dem Bohrungsabschnitt 32 und der Außenumfangsfläche der inneren Führungshülse 3 gebildet ist. Gegen den Bund 51 liegt die Druckfeder 36 an, die sich an dem Bund 34 der inneren Führungshülse 3 abstützt. Die lichte Weite der Verschlusshülse 7, die, ausgehend von dem Bund 52 in Richtung auf den Bund 51, zylindrisch ist, entspricht dem Außendurchmesser der Außenumfangsfläche der inneren Führungshülse 3. Der Außendurchmesser hingegen ist gleich der lichten Weite des rohrförmigen Fortsatzes 26 der äußeren Führungshülse 4.

Die radiale Dicke des vorderen Bunds 52 ist so bemessen, dass dieser in der in Fig. 1 gezeigten Position den Ringspalt zwischen dem Kopf 45, und zwar an dessen größter Stelle, und der Mündung 29 der äußeren Führungshülse 4 bis auf sehr kleine im 0,1 mm Bereich oder darunter liegende, ausfüllt. Der Hub der Verschlusshülse 7 in Richtung auf die Mündung 29 wird durch die Anlage des Bunds 51 an der betreffenden Schulter der Stufenbohrung 31 begrenzt, nämlich dort, wo der Abschnitt 32 in den Bohrungsabschnitt innerhalb des Fortsatzes 26 übergeht.

Die Verschlusshülse 7 stellt gleichzeitig ein Steuerbauteil für die Verriegelungskugeln 28 dar.

Die Verriegelungshülse 8 gleitet im montierten Zustand einerseits auf dem Fortsatz 26 der äußeren Führungshülse 4 und andererseits auf deren Sechskant 25. Die Verrieglungshülse 8 weist einen radial nach innen vorstehenden Bund 54 sowie einen radial nach außen weg stehenden Bund 55 auf. An diesem Bund 55 liegt die Feder 16 an.

In der Verriegelungshülse 8 sitzt, wie gezeigt, ein Ring 56, der durch einen Sicherungsring 57 gegen die Rückseite des Bunds 54 gehalten ist. Der Ring 56 begrenzt zusammen mit dem Bund 54 eine umlaufende Ringnut 57 für die Verriegelungskugeln 28.

Auf der dem Grundkörper 2 zugekehrten Seite bildet die Verrieglungshülse 8 eine Nockenbahn 59, die sich aus einem vertieften Abschnitt 60 mit größerer axialer Tiefe aber geringerer Ausdehnung in Umfangsrichtung sowie einer Ausnehmung 61 mit geringerer axialer Tiefe jedoch größerer Ausdehnung im Umfangsrichtung zusammensetzt. Diese Nockenbahn 59 wird von dem Fühlstift 18 in einer weiter unten erläuterten Weise abgetastet.

Damit die Vorspannfeder 16 die Verrieglungshülse 8 nicht nur in axialer sondern auch in Umfangsrichtung vorspannen kann, ist sie mit zwei abgewinkelten Federenden 62 und 63 versehen. Das Federende 62 steckt in einer nicht weiter erkennbaren axialen Bohrung des Bunds 55, während das Federende 63 in der achsparallelen der seitlich versetzten Bohrung 64 in dem Bund 15 des Grundkörpers 2 verankert ist.

Auf der Verriegelungshülse 8 sitzt die Griffhülse 9, die mit einer Rastrippe 65 den Bund 55 hintergreift und an der gegenüberliegenden Seite mit einer Schulter 66 an dem Bund 55 anliegt. Gegenüber der Verriegelungshülse 8 ist die Griffhülse 9 drehgesichert, indem sie eine Sechskantöffnung 67 aufweist, die auf dem entsprechend sechskantigen Fortsatz 68 der Verrieglungshülse 8 steckt.

Eine weitere Verriegelungsrippe 67 hintergreift eine damit zusammenwirkende Rippe 68 an der Außenumfangsfläche des Bunds 15 des Grundkörpers 2. Die Rippe 67 steht in einem solchen Abstand von der Rippe 68, dass die Griffhülse 9, ausgehend von der Position nach Fig. 1, sich etwa um die axiale Länge des Rings 56 nach vorne, d.h. nach links, bewegen kann.

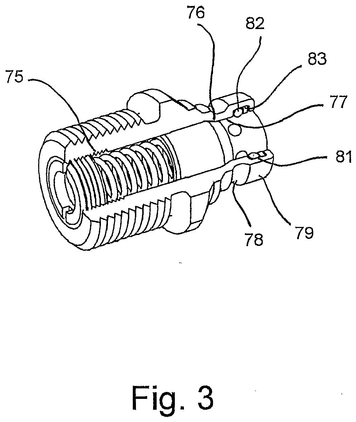

Die Fig. 2 und 3 zeigen einen mit dem Buchsenteil 1 zusammenwirkenden Stecker 70 in einer Explosionsdarstellung bzw. in einer perspektivischen Schnittansicht.

Zu dem Stecker 70 gehört ein Steckergrundköper 71, ein Verschlussstück 72, eine Vorspannfeder 73 sowie ein Federwiederlager 74. Durch den Steckergrundköper 71 führt eine Stufenbohrung hindurch, die am hinteren Ende des Steckers 70 ein Innengewinde 75 enthält. Im Abstand zu dem Innengewinde 75 geht die Durchgangsbohrung in eine Kegelfläche 76 über, an der sich die Bohrung in einen zylindrischen Bohrungsabschnitt 77 mit geringerem Durchmesser fortsetzt. Dort, wo die Kegelfläche 76 vorhanden ist, enthält der Steckergrundkörper 71 an seiner Außenumfangsfläche eine umlaufende Ringnut 78. Im Anschluss an diese Ringnut 78 setzt sich der Stecker 70 mit einem rohrförmig zylindrischen Fortsatz 79 fort. In diesem Bereich befindet sich eine der Innenseite ein Nut 80 mit einer darin sitzenden O-Ringdichtung 82 und einer Stützscheibe 83.

Das Verschlussstück 42 hat die Gestalt eines Bechers mit einem rohrförmig zylindrischen Kragen 84 und einem zylindrischen Kopf 85. Dort, wo der Kragen 84 in den Kopf 85 übergeht, sind eine Reihe von Radialbohrungen 86 vorhanden.

Der Kopf 85 hat, wie Fig. 3 erkennen lässt, einen Durchmesser derart, dass er mit seiner Außenumfangsfläche dichtend an der O-Ringdichtung 82 anliegt. In dieser Stellung befinden sich die Radialbohrungen 86 immer noch links von dem O-Ring 82, bezogen auf die Darstellung von Fig. 3. Der Hub des Verschlussstücks 72 wird von der Kegelfläche 76 begrenzt zu der eine entsprechende Kegelfläche 87 an dem Verschlussstück 72 komplementär ist. Wenn die beiden Kegelflächen 76 und 87 aneinander anliegen ist die plane Stirnseite des Kopfes 85 mit dem freien Ende des Einsteckfortsatzes 79 bündig.

Die Druckfeder 73 liegt zwischen dem Verschlussstück 72 und der Widerlagerschraube 74, und zwar steckt die Feder 73 in der Sackbohrung, die durch den Kragen 84 umgrenzt ist.

Die Verschlussschraube 74 ist entweder durchbohrt, wenn die Bohrung frei ist, oder sie enthält in der Bohrung ein aus einem Sintermetall hergestelltes Sieb.

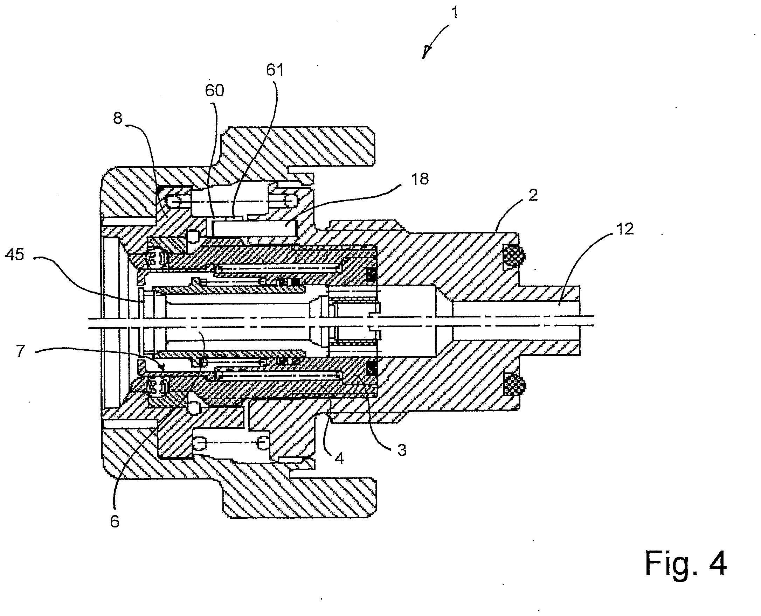

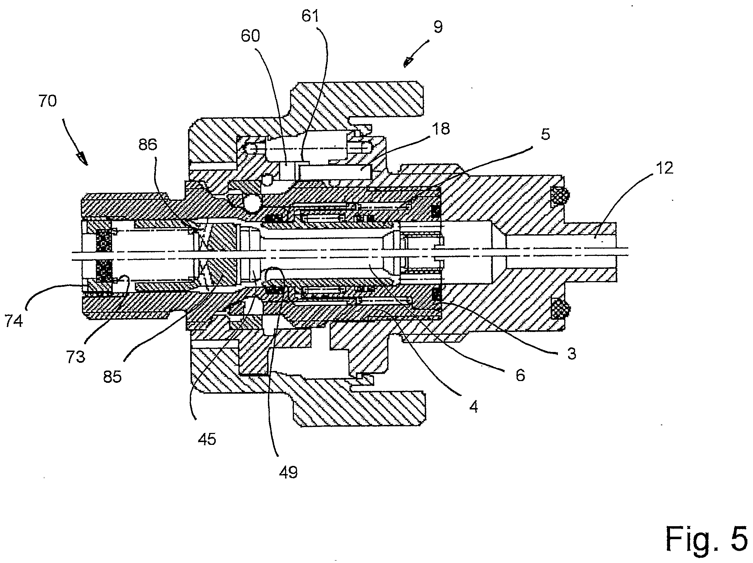

Die Funktion und das Zusammenwirken des Buchsenteils 1 mit dem Stecker 70 ist nachfolgend im Zusammenhang mit Fig. 4 bis 5 erläutert:
Wenn der Stecker in dem Buchsenteil 1 nicht eingesteckt ist, nimmt das Verschlussstück 72 die in Fig. 3 gezeigte Stellung ein. Dabei steckt der Kopf 85 in der O-Ringdichtung 82 und schließt den Stecker vollständig ab. Ein Eindringen von Fremdpartikeln ist unmöglich. Gleichzeitig ist auch jegliche Strömung durch den Stecker unterbrochen.

Fig. 4 zeigt die Stellung des Buchsenteils 1 ohne eingesteckten Stecker. In dieser Stellung befindet sich die Verriegelungshülse 8 in der hinteren Position in der die Nut 58 in der Lage ist, die Verriegelungskugeln 28 teilweise aufzunehmen. Die Verschlusshülse 7 steht in ihrer vorderen Stellung und dichtet den Ringspalt zwischen dem Kopf 45 und der Mündung 29 in der äußeren Verschlusshülse 4 weitgehend ab. Das Abdichten ist kein luftdichter Abschluss, sondern geht nur soweit, dass er das Eindringen von Partikeln oberhalb einer vorgegebenen Größe weitgehend verhindert. Es verbleibt ein Ringspalt zwischen dem Bund 52 und dem Kopf von ca. 0,1 mm. Die Mantelfläche der Verschlusshülse 7 liegt gleitend an der Innenumfangsfläche der äußeren Führungshülse 4 an. In dieser Position werden somit von der Verschlusshülse 7 auch gleichzeitig die Rastkugeln 28 in ihrer radial äußeren Stellung gehalten, wie dies Fig. 4 erkennen lässt. Das Zusammenwirken zwischen der Verschlusshülse 7 und den Rastkugeln 28 hält somit die Verriegelungshülse 8 in der gezeigten Stellung, weil die Kugeln in die Rastnut 58 eintauchen.

Die Kraft, um die Verschlusshülse 7 in diese Stellung zu bewegen, wird von der Feder 36 aufgebracht.

Die Feder 41 schiebt die Kuppelhülse 5 in die Anlagestellung an dem Kopf 45. Damit ist durch das Zusammenwirken der Kuppelhülse 5 mit dem Kopf 45 der Strömungskanal durch den Kupplungsteil 1 weitgehend gedrosselt.

Wenn angenommen wird, dass an dem Buchsenteil 1 eine Pressluftflasche angeschlossen ist und das Flaschenventil von Hand geöffnet wurde, kann die ausströmende Pressluft durch den Durchlasskanal 12 und die Bohrungen 40 in den Ringspalt zwischen dem Hals 44 des Stößels 6 und der Verschlusshülse 5 einströmen. Da die Verschlusshülse 5 mit ihrer Kegelfläche 49 an dem Kopf 45 anliegt, dichtet sie dort ab. Eine Strömungsverbindung besteht lediglich an der abgeflachten Stelle 47, so dass die Pressluft hierüber abströmen kann. Nach dem Schließen des Flaschenventils kann ein Druckausgleich stattfinden, indem sich über diese Lekage in Gestalt der Flachstelle 47 der Druck allmählich ausgleicht. Andererseits kann wegen der Drosselwirkung an dieser Stelle kein gefährdender Luftstrahl aus dem Buchsenteil 1 austreten.

In der nicht gekuppelten Stellung fluchtet im Übrigen die Ausnehmung 60 der Kulissenbahn 59 mit dem Fühlstift 18, der dort eintaucht. Hierdurch wird ein Verdrehen der Verriegelungshülse 8 im Umfangsrichtung blockiert. Wenn ausgehend von der in Fig. 4 gezeigten Stellung der Stecker 70 eingesteckt wird, dringt dessen Einsteckende 79 in den Ringspalt zwischen dem Kopf 45 und dem Einsteckende 26 der äußeren Führungshülse 4 ein. Hierdurch wird die Verschlusshülse 7, entgegen der Wirkung der Feder 36, zurückgedrängt. Die O-Ringdichtung 82 des Steckers 70 passiert den Kopf 45 des Stößels 6 und gelangt auf die Kuppelhülse 5, wo sie abdichtend aufliegt. Beim weiteren Einschieben des Steckers bewegt dieser zusätzlich auch die Kuppelhülse 5 entgegen der Wirkung der Feder 41 zurück, wodurch ein weit offener kegelförmiger Ringspalt zwischen der Kuppelhülse 5 und dem Kopf 45 gebildet wird. In der Endlage steht die Halterille 78 den Rastkugeln 28 gegenüber. Dadurch wird die Sperrwirkung der Rastkugeln 28 an der Verriegelungshülse 8 aufgehoben. Die Verriegelungshülse 8 kann von der Feder 16 nach vorne in Richtung auf den Stecker 70 bewegt werden, wobei die Zylinderfläche des Rings 56 über die Rastkugeln 28 gebracht wird. Die Rastkugeln sind somit wirksam daran gehindert, wieder radial nach außen zu wandern. Sie werden vielmehr in der Rille 78 eintauchend festgehalten.

Aufgrund der Axialbewegung der Verrieglungshülse 8 kommt der Fühlstift 18 aus der vertieften Ausnehmung 60 frei. Die Vorspannfeder 16 kann daraufhin die Verrieglungshülse 8 in Umfangsrichtung drehen, bis der Fühlstift 18 am Ende der Ausnehmung 61 ankommt. Diese Drehbewegung entspricht etwa 30°.

Beim Einstecken des Steckers 70 kommt der Kopf 45 des Stößels 6 außerdem mit dem Verschlussstück 72 in Eingriff und schiebt das Verschlussstück 72 entgegen der Wirkung der Feder 73 in den Stecker zurück. Dadurch wird die dichtende Verbindung zwischen der Kegelfläche 76 und der Kegelfläche 87 aufgehoben, so dass eine weitgehend freie Durchströmung des Steckers 70 möglich ist.

Im eingesteckten Zustand besteht somit eine freie Strömungsverbindung zwischen einer an dem Kupplungsteil 1 angeschlossen Pressluftflasche und einem an dem Stecker 70 angeschlossenen Lungenautomaten. Das unbetätigte Flaschenventil kann gefahrlos aufgedreht werden, um Pressluft zu dem Lungenautomaten zu liefern.

Vor einem Trennen der Kupplungsverbindung ist zunächst das Flaschenventil zu schließen. Über den Lungenautomaten tritt ein entsprechender Druckabbau auf, so dass die Steckverbindung nunmehr im praktisch druckfreien Zustand getrennt werden kann.

Die Position des Fühlstiftes 18 im Bereich der Ausnehmung 61 verhindert, dass über die Griffhülse 9 die Verriegelungshülse 8 zurückgezogen werden kann. Um ein Zurückziehen der Verriegelungshülse 8 zu ermöglichen, muss sie zunächst, entgegen der Wirkung der Schraubenfeder 16, gedreht werden bis der Fühlstift 18 mit der tieferen Ausnehmung 60 fluchtet. Erst dann kann die Verriegelungshülse 8 zurückgezogen werden in eine Stellung in der wiederum ihre Rastnut 58 mit dem Ring aus den Kugeln 28 fluchtet. Die Kugeln 28 können von dem Stecker aus der Kugelrille 78 radial nach außen gedrängt werden, so dass der Stecker 70 aus dem Buchsenteil 1 durch die Wirkung der Federn 36 und 73 herausgeschoben werden kann. Bei gezogenem Stecker geht die Verschlusshülse 7 wieder im Bereich der Rastkugeln 28 und hält sie in der Rastnut 58 der Verriegelungshülse 8.

Wenn abweichend von der oben stehenden Funktionserläuterung die Pressluftflasche mit dem handbetätigten Flaschenventil nicht an dem Buchsenteil 1, sondern an dem Stecker 70 angeschlossen ist, ist der Stecker 70 mit einer steuerbaren Drosselrichtung versehen, die in einer Stellung, nämlich der gesteckten Stellung die Strömungsverbindung zwischen der Flasche und dem Lungenautomaten nicht behindert und in der anderen Stellung, ohne den Durchfluss durch den Stecker 70 vollständig abzusperren, dennoch die Strömungsverbindung zur Außenatmosphäre stark drosselt, um ein gefährliches Ausströmen von Luft zu verhindern.

Wie im Übrigen sich aus der Funktionserläuterung ergibt, ist sowohl der Stecker 70 als auch der Buchsenteil 1 weitgehend gegen das Eindringen von Fremdkörpern geschützt. Wie die Zeichnungen unschwer erkennen lassen, bilden sowohl das Buchsenteil 1 als auch der Stecker 70 im Wesentlichen glatte, flache, wenig zerklüftete oder gegliederte Einsteckenden, die leicht sauber zu halten sind.

Ein drucklos zu betätigendes Buchsenteil einer Fluidkupplung ist mit Mitteln versehen, die den Einsteckraum eines Steckers mechanisch weitgehend gegen das Eindringen von Fremdkörpern abdichten. Außerdem ist eine Drosseleinrichtung vorhanden, die bei eingestecktem Stecker die Fluidverbindung praktisch nicht behindert, während bei herausgezogenem Stecker ein hoher Strömungswiderstand entsteht, ohne jedoch dem Strömungweg vollständig abzusperren. Der zugehörige Stecker weist ebenfalls eine Verschlusseinrichtung auf, um den Strömungskanal bei gezogenem Stecker gegen das Eindringen von Partikeln zu schützen. Im Falle des Anschlusses des Steckers an eine Pressluftflasche ist dieser mit einer Drosseleinrichtung versehen, die bei eingestecktem Stecker die Strömungsverbindung praktisch nicht behindert, bei gezogenem Stecker jedoch erheblichem Strömungswiderstand bildet, ohne die Strömungsverbindung vollständig abzusperren.

## Patentansprüche

1. Buchsenteil (1) für einen Stecker (70) einer Fluidkupplung,
mit einem Grundkörper (2), der einen Durchgangskanal (12) aufweist,
mit einer in dem Grundköper (2) verankerten Führungshülsenanordnung (3,4), die in Verlängerung des Durchgangskanals (12) vorgesehen ist und ein von dem Grundkörper (2) abliegendes Einsteckende (29) aufweist,
mit einem in der Führungshülsenanordnung (3,4) vorgesehenen Stößel (6), der bis in die Nähe des Einsteckendes (29) reicht, der in der Nähe des Einsteckendes (29) einen Kopf (45) trägt und der mit der Führungshülsenanordnung (3,4) einen Ringraum begrenzt, der mit dem Durchgangskanal (12) ständig strömungsmäßig in Verbindung steht, und
mit Haltegliedern (28), die in Öffnungen (27) der Führungshülsenanordnung (3,4) geführt sind,
mit einer Verriegelungshülse (8), die zwischen einer Verriegelungsstellung und einer Freigabestellung in axialer Richtung hin und her verschiebbar sowie in Umfangsrichtung verdrehbar ist,
mit einer Vorspannfeder (16), durch die die Verriegelungshülse (8) in die Verriegelungsstellung axial vorspannbar ist und in eine Drehstellung vorspannbar ist,
wobei der Grundkörper (2) und/oder die Führungshülsenanordnung (3,4) ein Widerlager (15) für die Vorspannfeder (16) aufweist/aufweisen, die andernends an der Verrieglungshülse (8) angreift.

2. Buchsenteil nach Anspruch 1, **dadurch gekennzeichnet, dass** sie eine Drosselstelle aufweist, die zwischen einer Abplattung (47) an einer Kegelmantelfläche des Kopfes (45) des Stößels (6) und einer auf der Kegelmantelfläche des Kopfes (45) anliegenden Fasenfläche (49) ausgebildet ist und die dazu eingerichtet ist, bei entnommenem Stecker (70) den Durchgangskanal (12) zur Außenatmosphäre entlüftet zu halten.

3. Buchsenteil nach Anspruch 1, **dadurch gekennzeichnet, dass** der Grundkörper (2) im Wesentlichen rotationssymmetrisch ist und ein Anschlussgewinde (11) trägt.

4. Buchsenteil nach Anspruch 1, **dadurch gekennzeichnet, dass** der Grundkörper (2) als Durchgangskanal eine Stufenbohrung (12) enthält.

5. Buchsenteil nach Anspruch 1, **dadurch gekennzeichnet, dass** der Grundkörper (2) ein Innengewinde (21) zur Befestigung der Führungshülsenanordnung (3,4) aufweist.

6. Buchsenteil nach Anspruch 1, **dadurch gekennzeichnet, dass** die Führungshülsenanordnung (3,4) mit dem Grundkörper (2) verschraubt ist.

7. Buchsenteil nach Anspruch 1, **dadurch gekennzeichnet, dass** die Führungshülsenanordnung (3,4) in der Nähe des Einsteckendes (29) eines Anzahl von Bohrungen (27) aufweist, in denen Verriegelungsglieder (28) sitzen, die zu der/einer Verrieglungseinrichtung gehören.

8. Buchsenteil nach Anspruch 1, **dadurch gekennzeichnet, dass** zu der Führungshülsenanordnung (3,4) eine äußere und eine innere Führungshülse (3,4) gehören, die zusammen einen zylindrischen Ringspalt bilden, der vorzugsweise eine Schraubendruckfeder (36) aufnimmt.

9. Buchsenteil nach Anspruch 8, **dadurch gekennzeichnet, dass** der Stößel (6) in der inneren Führungshülse (3) angeordnet ist.

10. Buchsenteil nach Anspruch 8, **dadurch gekennzeichnet, dass** die innere Führungshülse (3) an einem Boden (38) endet, der wenigstens eine Längsrichtung der inneren Führungshülse (3) verlaufenden Bohrung (40) aufweist, die als Strömungskanal dient, über die das Innere der inneren Führungshülse (3) mit dem Durchgangskanal (12) strömungsmäßig in Verbindung steht.

11. Buchsenteil nach Anspruch 10, **dadurch gekennzeichnet, dass** die wenigstens eine Durchgangsbohrung (40) seitlich neben dem Stößel (6) mündet.

12. Buchsenteil nach einem beliebigen der vorhergehenden Ansprüche, ferner
mit einer Verschlusshülse (7), die in dem Ringraum zwischen der Führungshülsenanordnung (3,4) und dem Stößel (6) vorgesehen ist und die zwischen einer Arbeits- und einer Ruhestellung längsverschieblich hin und her bewegbar ist, wobei die Verschlusshülse (7) in der Ruhestellung den Ringraum im Bereich zwischen der Führungshülsenanordnung (3,4) und dem Kopf (45) des Stößels (6) mechanisch weitgehend verschließt, ohne den Ringraum abzudichten, und
mit einer Vorspanneinrichtung (36) für die Verschlusshülse (7) um die Verschlusshülse (7) in die Ruhestellung vorzuspannen.

13. Buchsenteil nach Anspruch 12, **dadurch gekennzeichnet, dass** die Verschlusshülse (7) sich aus einem zylindrischen Kragen und einem nach radial nach innen ragenden Bund (52) und einen radial nach außen ragenden Kragen (51) zusammensetzt.

14. Buchsenteil nach Anspruch 13, **dadurch gekennzeichnet, dass** der zylindrische äußere Kragen (51) derart auf die Führungshülsenanordnung (3,4) abgestimmt ist, dass er in den Ringraum zwischen der äußeren und der inneren Führungshülse (3,4) eintauchen kann.

15. Buchsenteil nach Anspruch 1, **dadurch gekennzeichnet, dass** der Buchsenteil (1) eine Kuppelhülse (5) aufweist, die in der Führungshülsenanordnung (3,4) in Längsrichtung parallel zu der Achse des Stößels (6) verschiebbar ist.

16. Buchsenteil nach Anspruch 15, **dadurch gekennzeichnet, dass** die Kuppelhülse (5) einends abgedichtet in einer Bohrung der Führungshülsenanordnung (3,4) verschieblich ist.

17. Buchsenteil nach Anspruch 15, **dadurch gekennzeichnet, dass** die Kuppelhülse (5) mit ihrem außen liegenden Ende, das dem Einsteckende (29) benachbart ist, an dem Kopf (45) des Stößels (6) anliegt.

18. Buchsenteil nach Anspruch 15, **dadurch gekennzeichnet, dass** die Kuppelhülse (5) an dem Kopf (45) des Stößels (6) nicht abdichtend anliegt derart, dass der Innenraum der Kuppelhülse (5) zur Außenatmosphäre hin entlüftet ist.

19. Buchsenteil nach Anspruch 15, **dadurch gekennzeichnet, dass** das eine Vorspanneinrichtung (41) vorgesehen ist, durch die die Kuppelhülse (5) in Richtung auf den Kopf (45) des Stößels (6) vorgespannt ist.

20. Buchsenteil nach Anspruch 15, **dadurch gekennzeichnet, dass** die Kuppelhülse (5) einen radial nach außen ragenden Anschlag (48), vorzugsweise in Gestalt eines Bunds aufweist, der mit der Verschlusshülse (7) in Eingriff bringbar ist, derart, dass beim Zurückschieben der Verschlusshülse (7) durch einen eingeführten Stecker (70) auch die Kuppelhülse (5) von dem Kopf (45) wegbewegt wird.

21. Buchsenteil nach Anspruch 1, **dadurch gekennzeichnet, dass** die Verriegelungshülse (8) auf der Außenseite der Führungshülsenanordnung (3,4) geführt ist.

22. Buchsenteil nach Anspruch 21, **dadurch gekennzeichnet, dass** die Verriegelungshülse (8) eine umlaufende Ringnut (58) für Verriegelungskörper (28) aufweist, die radial in der Führungshülsenanordnung (3,4) geführt sind.

23. Buchsenteil nach Anspruch 1, **dadurch gekennzeichnet, dass** die Verriegelungshülse (8) von einer Griffhülse (9) umgeben ist.

24. Buchsenteil nach Anspruch 23, **dadurch gekennzeichnet, dass** die Griffhülse (9) den axialen Hub der Verriegelungshülse (8) in zumindest einer Richtung begrenzt.

25. Buchsenteil nach Anspruch 1, **dadurch gekennzeichnet, dass** die Vorspannfeder (16) eine Schraubenfeder ist, die sowohl in axialer Richtung als auch in Umfangsrichtung wirksam ist.

26. Buchsenteil nach Anspruch 1, **dadurch gekennzeichnet, dass** die Verriegelungshülse (8) eine in Richtung auf den Grundkörper (2) zeigende Nockenfläche (59) aufweist, die aus der Sicht des Einsteckendes (29) einen unterschiedlichen Abstand zu dem Einsteckende (29) an zwei aneinander angrenzenden Flächen (60,61) aufweist.

27. Buchsenteil nach Anspruch 26, **dadurch gekennzeichnet, dass** der Grundkörper (2) mit einem Fühlstift (18) versehen ist, der mit der Nockenfläche (59) zusammenwirkt derart, dass lediglich in einer Drehstellung der Verriegelungshülse (8) eine Axialbewegung freigegeben ist und das in einer anderen Stellung eine Drehbewegung freigegeben ist.

28. Stecker (70) für einen Buchsenteil (1) einer Fluidkupplung,
mit einem Grundkörper (71), der einen Strömungskanal enthält und der ein rohrförmiges Einsteckende (79) mit endseitiger Mündung aufweist, das in den zugehörigen Buchsenteil (1) einführbar ist,
mit einem Verschlussstück (72), das in dem Einsteckende (79) angeordnet ist und zwischen einer Arbeits- und einer Ruhestellung längsverschieblich hin und her bewegbar ist, wobei das Verschlussstück (79) in der Ruhestellung die Mündung des Einsteckendes (79) zumindest mechanisch weitgehend verschließt, und
mit einer Vorspanneinrichtung (73) für das Verschlussstück (72), um das Verschlussstück (72) in die Ruhestellung vorzuspannen;
wobei das Verschlussstück (72), im Schnitt gesehen, eine becherförmige Gestalt mit einem der Mündung benachbarten Kopf (85) und einem davon ausgehenden Kragen (84) aufweist,
**dadurch gekennzeichnet, dass** durch den Kragen (84) des Verschlussstücks (72) wenigstens eine Radialbohrung (86) hindurchführt, wobei in der Ruhestellung des Verschlussstücks (72) eine Strömungsverbindung zwischen dem Grundkörper (71) und dem Verschlussstück (72) dichtend verschlossen ist, während in der Arbeitsstellung des Verschlussstücks (72) diese dichtende Verbindung aufgehoben ist und eine freie Durchströmung des Steckers (70) zwischen dem Grundkörper (71) und dem Verschlussstück (72) sowie durch die wenigstens eine Radialbohrung (86) hindurch ermöglicht ist.

29. Stecker nach Anspruch 28, **dadurch gekennzeichnet, dass** der Strömungskanal von einer durchgehenden Bohrung (76,77) gebildet ist.

30. Stecker nach Anspruch 28, **dadurch gekennzeichnet, dass** der Stecker (70) auf dem Einsteckende (79) eine außen umlaufende Ringnut (78) aufweist.

31. Stecker nach Anspruch 28, **dadurch gekennzeichnet, dass** er in dem Einsteckende (79) eine zylindrische Bohrung (77) aufweist mit einer umlaufenden Ringnut (81) zur Aufnahme einer Dichtung (82).

32. Stecker nach Anspruch 28, **dadurch gekennzeichnet, dass** die lichte Weite des Einsteckendes (79) mit dem Außendurchmesser einer Kuppelhülse (5) eines Buchsenteils (1) zusammenstimmt.

33. Stecker nach Anspruch 28, **dadurch gekennzeichnet, dass** der Kragen (84) einen größeren Außendurchmesser aufweist als der Kopf (85).

34. Stecker nach Anspruch 28, **dadurch gekennzeichnet, dass** der Stecker (70) an seiner Rückseite, die von der Mündung abliegt, ein Sieb enthält.

35. Stecker nach Anspruch 28, **dadurch gekennzeichnet, dass** der Stecker (70) an seiner Außenumfangsfläche mit einem Anschlussgewinde versehen ist.

## Claims

1. Socket part (1) for a plug (70) of a fluid coupling,
with a base body (2) having a passage channel (12),
with a guide sleeve arrangement (3, 4) which is anchored in the base body (2), is provided in the extension of the passage channel (12) and has a push-in end (29) lying remote from the base body (2),
with a plunger (6) which is provided in the guide sleeve arrangement (3, 4), extends up to the vicinity of the push-in end (29), carries a head (45) in the vicinity of the push-in end (29) and, together with the guide sleeve arrangement (3, 4), delimits an annular space which is constantly fluidically connected to the passage channel (12), and
with retaining members (28) which are guided into openings (27) of the guide sleeve arrangement (3, 4),
with a locking sleeve (8) which can be moved forward and back in the axial direction between a locking position and a release position and is rotatable in the circumferential direction,
with a preload spring (16) which can axially preload the locking sleeve (8) in the locking position and in a rotational position,
wherein the base body (2) and/or the guide sleeve arrangement (3, 4) comprises an abutment (15) for the preload spring (16) which at the other end acts on the locking sleeve (8).

2. Socket part according to claim 1, **characterised in that** it has a throttle point which is formed between a flattening (47) on a conical casing surface of the head (45) of the plunger (6) and a chamfered face (49) lying against the conical casing surface of the head (45), and which is designed to keep the passage channel (12) vented to the external atmosphere when the plug (70) is extracted.

3. Socket part according to claim 1, **characterised in that** the base body (2) is substantially rotationally symmetrical and carries a connecting thread (11).

4. Socket part according to claim 1, **characterised in that** the base body (2) contains a stepped bore (12) as a passage channel.

5. Socket part according to claim 1, **characterised in that** the base body (2) has an internal thread (21) for fixing the guide sleeve arrangement (3, 4).

6. Socket part according to claim 1, **characterised in that** the guide sleeve arrangement (3, 4) is bolted to the base body (2).

7. Socket part according to claim 1, **characterised in that** in the vicinity of the push-in end (29), the guide sleeve arrangement (3, 4) comprises a number of bores (27) containing locking members (28) which belong to the/a locking device.

8. Socket part according to claim 1, **characterised in that** the guide sleeve arrangement (3,4) comprises an outer and an inner guide sleeve (3, 4) which together form a cylindrical annular gap which preferably receives a coil compression spring (36).

9. Socket part according to claim 8, **characterised in that** the plunger (6) is arranged in the inner guide sleeve (3).

10. Socket part according to claim 8, **characterised in that** the inner guide sleeve (3) ends at a floor (38) which has at least one bore (40) running in the longitudinal direction of the inner guide sleeve (3) and serving as a flow channel, via which the interior of the inner guide sleeve (3) is fluidically connected to the passage channel (12).

11. Socket part according to claim 10, **characterised in that** the at least one passage bore (40) opens at the side next to the plunger (6).

12. Socket part according to any of the preceding claims, furthermore with a closing sleeve (7) which is provided in the annular space between the guide sleeve arrangement (3, 4) and the plunger (6), and which can be moved forward and back in a longitudinally displaceable fashion between a working position and a rest position, wherein the closing sleeve (7) in the rest position mechanically largely closes the annular space in the region between the guide sleeve arrangement (3, 4) and the head (45) of the plunger (6) without sealing the annular space, and
with a preload device (36) for the closing sleeve (7), for preloading the closing sleeve (7) in the rest position.

13. Socket part according to claim 12, **characterised in that** the closing sleeve (7) is composed of a cylindrical collar with a radially inwardly protruding cuff (52) and a radially outwardly protruding collar (51).

14. Socket part according to claim 13, **characterised in that** the cylindrical outer collar (51) is matched to the guide sleeve arrangement (3, 4) such that it can be introduced into the annular space between the outer and the inner guide sleeves (3, 4).

15. Socket part according to claim 1, **characterised in that** the socket part (1) has a coupling sleeve (5) which is displaceable in the guide sleeve arrangement (3, 4) in the longitudinal direction parallel to the axis of the plunger (6).

16. Socket part according to claim 15, **characterised in that** the coupling sleeve (5) is sealed at one end and is displaceable in a bore of the guide sleeve arrangement (3, 4).

17. Socket part according to claim 15, **characterised in that** with its outer end adjacent to the push-in end (29), the coupling sleeve (5) lies against the head (45) of the plunger (6).

18. Socket part according to claim 15, **characterised in that** the coupling sleeve (5) lies against the head (45) of the plunger (6) in a non-sealed fashion, such that the interior of the coupling sleeve (5) is vented to the external atmosphere.

19. Socket part according to claim 15, **characterised in that** a preload device (41) is provided which preloads the coupling sleeve (5) in the direction towards the head (45) of the plunger (6).

20. Socket part according to claim 15, **characterised in that** the coupling sleeve (5) has a radially outwardly protruding stop (48), preferably in the form of a cuff, which can be brought into engagement with the closing sleeve (7) such that when the closing sleeve (7) is pushed back by an inserted plug (70), the coupling sleeve (5) is also moved away from the head (45).

21. Socket part according to claim 1, **characterised in that** the locking sleeve (8) is guided on the outside of the guide sleeve arrangement (3, 4).

22. Socket part according to claim 21, **characterised in that** the locking sleeve (8) has a peripheral ring groove (58) for locking bodies (28) which are guided radially in the guide sleeve arrangement (3, 4).

23. Socket part according to claim 1, **characterised in that** the locking sleeve (8) is surrounded by a grip sleeve (9).

24. Socket part according to claim 23, **characterised in that** the grip sleeve (9) limits the axial travel of the locking sleeve (8) in at least one direction.

25. Socket part according to claim 1, **characterised in that** the preload spring (16) is a coil spring which acts both in the axial direction and in the circumferential direction.

26. Socket part according to claim 1, **characterised in that** the locking sleeve (8) has a cam face (59) which points in the direction towards the base body (2) and, viewed from the push-in end (29), has a different distance from the push-in end (29) at two adjacent faces (60, 61).

27. Socket part according to claim 26, **characterised in that** the base body (2) is provided with a tracer pin (18) which cooperates with the cam face (59) such that an axial movement is possible in only one rotary position of the locking sleeve (8) and a rotary movement is possible in another position.

28. Plug (70) for a socket part (1) of a fluid coupling,
with a base body (71) containing a flow channel and having a tubular push-in end (79) which has an opening at the end and can be inserted in the associated socket part (1), with a closing piece (72) which is arranged in the push-in end (79) and can be moved forward and back in a longitudinally displaceable fashion between a working position and a rest position, wherein the closing piece (79) in the rest position at least mechanically largely closes the opening of the push-in end (79), and
with a preload device (73) for the closing piece (72) for preloading the closing piece (72) in the rest position,
wherein, viewed in cross-section, the closing piece (72) has a beaker-like form with a head (85) adjacent to the opening and a collar (84) starting therefrom,
**characterised in that** at least one radial bore (86) passes through the collar (84) of the closing piece (72), wherein in the rest position of the closing piece (72), a fluidic connection between the base body (71) and the closing piece (72) is tightly closed, while in the working position of the closing piece (72), this sealed connection is eliminated and a free flow is possible through the plug (70) between the base body (71) and the closing piece (72) and through the at least one radial bore (86).

29. Plug according to claim 28, **characterised in that** the flow channel is formed by a continuous bore (76, 77).

30. Plug according to claim 28, **characterised in that** the plug (70) has an outer circumferential ring groove (78) on the push-in end (79).

31. Plug according to claim 28, **characterised in that** it has a cylindrical bore (77) in the push-in end (79) with a circumferential ring groove (81) for receiving a seal (82).

32. Plug according to claim 28, **characterised in that** the clear internal width of the push-in end (79) corresponds to the outer diameter of a coupling sleeve (5) of a socket part (1).

33. Plug according to claim 28, **characterised in that** the collar (84) has a larger outer diameter than the head (85).

34. Plug according to claim 28, **characterised in that** the plug (70) comprises a screen on a back side remote from the opening.

35. Plug according to claim 28, **characterised in that** the plug (70) is provided with an external thread on its outer circumferential face.

## Revendications

1. Raccord femelle (1) destiné à un raccord mâle (70) d'un coupleur fluidique,
comprenant un corps de base (2) qui présente un conduit de passage (12),
comprenant un ensemble de manchons de guidage (3, 4) qui est prévu dans le prolongement du conduit de passage (12) et présente une extrémité d'insertion (29) éloignée du corps de base (2),
comprenant un poussoir (6) qui est prévu dans l'ensemble de manchons de guidage (3, 4), qui s'étend jusqu'à proximité de l'extrémité d'insertion (29), qui porte une tête (45) à proximité de l'extrémité d'insertion (29) et qui délimite avec l'ensemble de manchons de guidage (3, 4) un espace annulaire qui communique du point de vue de l'écoulement en permanence avec le conduit de passage (12), et
comprenant des éléments de maintien (28) qui sont guidés dans des ouvertures (27) de l'ensemble de manchons de guidage (3, 4),
comprenant une douille de verrouillage (8) qui peut être déplacée en translation en va-et-vient dans la direction axiale, entre une position de verrouillage et une position de libération, et qui peut être tournée dans le sens de la circonférence,
comprenant un ressort de précontrainte (16) qui permet de mettre la douille de verrouillage (8) sous précontrainte axiale, en direction de la position de verrouillage, et sous précontrainte en direction d'une position de rotation,
sachant que le corps de base (2) et/ou l'ensemble de manchons de guidage (3, 4) présente(nt) un élément de contre-appui (15) pour le ressort de précontrainte (16) qui agit avec son autre extrémité sur la douille de verrouillage (8).

2. Raccord femelle selon la revendication 1, **caractérisé en ce qu'**il présente un point d'étranglement qui est réalisé entre un aplatissement (47) d'une surface enveloppe conique de la tête (45) du poussoir (6) et une surface chanfreinée (49) appliquée sur la surface enveloppe conique de la tête (45) et qui est conçu pour assurer la ventilation du conduit de passage (12) vers l'atmosphère extérieure, lorsque le raccord mâle (70) est retiré.

3. Raccord femelle selon la revendication 1, **caractérisé en ce que** le corps de base (2) est sensiblement symétrique de révolution et porte un filet de raccordement (11).

4. Raccord femelle selon la revendication 1, **caractérisé en ce que** le corps de base (2) comporte un alésage étagé (12) en tant que conduit de passage.

5. Raccord femelle selon la revendication 1, **caractérisé en ce que** le corps de base (2) présente un filet femelle (21) destiné à la fixation de l'ensemble de manchons de guidage (3, 4).

6. Raccord femelle selon la revendication 1, **caractérisé en ce que** l'ensemble de manchons de guidage (3, 4) est vissé avec le corps de base (2).

7. Raccord femelle selon la revendication 1, **caractérisé en ce que**, à proximité de l'extrémité d'insertion (29), l'ensemble de manchons de guidage (3, 4) présente un certain nombre de trous (27) dans lesquels sont placés des éléments de verrouillage (28) qui font partie du/d'un dispositif de verrouillage.

8. Raccord femelle selon la revendication 1, **caractérisé en ce que** l'ensemble de manchons de guidage (3, 4) comprend un manchon de guidage extérieur et un manchon de guidage intérieur (3, 4) qui forment ensemble un espace annulaire cylindrique, lequel reçoit de préférence un ressort hélicoïdal de compression (36).

9. Raccord femelle selon la revendication 8, **caractérisé en ce que** le poussoir (6) est disposé dans le manchon de guidage intérieur (3).

10. Raccord femelle selon la revendication 8, **caractérisé en ce que** le manchon de guidage intérieur (3) se termine par un fond (38) présentant au moins un alésage (40) qui s'étend dans le sens longitudinal du manchon de guidage intérieur (3) et sert de conduit d'écoulement via lequel l'intérieur du manchon de guidage intérieur (3) est en communication d'écoulement avec le conduit de passage (12).

11. Raccord femelle selon la revendication 10, **caractérisé en ce que** l'alésage de passage (40), au nombre d'au moins un, débouche latéralement à côté du poussoir (6).

12. Raccord femelle selon l'une quelconque des revendications précédentes, comprenant en outre
une bague d'obturation (7) qui est prévue dans l'espace annulaire entre l'ensemble de manchons de guidage (3, 4) et le poussoir (6) et qui peut être déplacée en translation longitudinale en va-et-vient, entre une position de travail et une position de repos, sachant que dans la position de repos, la bague d'obturation (7) obture mécaniquement dans une large mesure l'espace annulaire dans la région située entre l'ensemble de manchons de guidage (3, 4) et la tête (45) du poussoir (6), sans fermer cet espace annulaire de manière étanche, et
un dispositif de précontrainte (36) pour la bague d'obturation (7), afin de mettre la bague d'obturation (7) sous précontrainte en direction de la position de repos.

13. Raccord femelle selon la revendication 12, **caractérisé en ce que** la bague d'obturation (7) se compose d'un collet cylindrique et d'un épaulement (52) s'étendant radialement vers l'intérieur et d'une embase (51) s'étendant radialement vers l'extérieur.

14. Raccord femelle selon la revendication 13, **caractérisé en ce que** l'embase (51) cylindrique extérieure est adaptée à l'ensemble de manchons de guidage (3, 4) de manière à ce qu'elle puisse s'engager dans l'espace annulaire entre les manchons de guidage extérieur et intérieur (3, 4).

15. Raccord femelle selon la revendication 1, **caractérisé en ce que** le raccord femelle (1) présente un manchon d'accouplement (5) qui peut être coulissé dans le sens longitudinal dans l'ensemble de manchons de guidage (3, 4), parallèlement à l'axe du poussoir (6).

16. Raccord femelle selon la revendication 15, **caractérisé en ce que** le manchon d'accouplement (5) peut être coulissé dans un alésage de l'ensemble de manchons de guidage (3, 4), en étant rendu étanche à une extrémité.

17. Raccord femelle selon la revendication 15, **caractérisé en ce que** le manchon d'accouplement (5) est appliqué contre la tête (45) du poussoir (6) avec son extrémité située à l'extérieur, à proximité de l'extrémité d'insertion (29).

18. Raccord femelle selon la revendication 15, **caractérisé en ce que** le manchon d'accouplement (5) est appliqué contre la tête (45) du poussoir (6), sans établir l'étanchéité, de manière à ce que l'espace intérieur du manchon d'accouplement (5) soit ventilé vers l'atmosphère extérieure.

19. Raccord femelle selon la revendication 15, **caractérisé en ce qu'**il est prévu un dispositif de précontrainte (41) à l'aide duquel le manchon d'accouplement (5) est mis sous précontrainte en direction de la tête (45) du poussoir (6).

20. Raccord femelle selon la revendication 15, **caractérisé en ce que** le manchon d'accouplement (5) présente une butée (48) s'étendant radialement vers l'extérieur, de préférence sous la forme d'un épaulement qui peut être amené en prise avec la bague d'obturation (7), de manière à ce que lors du coulissement en arrière de la bague d'obturation (7) par un raccord mâle (70), le manchon d'accouplement (5) soit également éloigné de la tête (45).

21. Raccord femelle selon la revendication 1, **caractérisé en ce que** la douille de verrouillage (8) est guidée sur la face externe de l'ensemble de manchons de guidage (3, 4).

22. Raccord femelle selon la revendication 21, **caractérisé en ce que** la douille de verrouillage (8) présente une gorge annulaire (58) périphérique destinée à des corps de verrouillage (28) qui sont guidés radialement dans l'ensemble de manchons de guidage (3, 4).

23. Raccord femelle selon la revendication 1, **caractérisé en ce que** la douille de verrouillage (8) est entourée par une douille de préhension (9).

24. Raccord femelle selon la revendication 23, **caractérisé en ce que** la douille de préhension (9) limite la course axiale de la douille de verrouillage (8) dans au moins un sens.

25. Raccord femelle selon la revendication 1, **caractérisé en ce que** le ressort de précontrainte (16) est un ressort hélicoïdal qui agit aussi bien dans la direction axiale que dans la direction périphérique.

26. Raccord femelle selon la revendication 1, **caractérisé en ce que** la douille de verrouillage (8) présente une surface de came (59) qui est orientée en direction du corps de base (2) et qui, vu depuis l'extrémité d'insertion (29), présente des distances différentes par rapport à l'extrémité d'insertion (29), sur deux surfaces (60, 61) mutuellement adjacentes.

27. Raccord femelle selon la revendication 26, **caractérisé en ce que** le corps de base (2) est pourvu d'un doigt de palpage (18) qui coopère avec la surface de came (59), de manière à ce qu'un mouvement axial soit autorisé uniquement dans une position de rotation de la douille de verrouillage (8) et qu'un mouvement de rotation soit autorisé dans une autre position.

28. Raccord mâle (70) destiné à un raccord femelle (1) d'un coupleur fluidique,
comprenant un corps de base (71) qui contient un conduit d'écoulement et qui présente une extrémité d'insertion (79) tubulaire, avec une bouche côté extrémité, qui peut être insérée dans le raccord femelle (1) associé,
comprenant une pièce d'obturation (72) qui est disposée dans l'extrémité d'insertion (79) et peut être déplacée en va-et-vient en translation longitudinale, entre une position de travail et une position de repos, sachant que dans la position de repos, la pièce d'obturation (79) ferme au moins mécaniquement dans une large mesure l'extrémité d'insertion (79), et
comprenant un dispositif de précontrainte (73) pour la pièce d'obturation (72), destiné à mettre la pièce d'obturation (72) sous précontrainte en direction de la position de repos ;
sachant que la pièce d'obturation (72), vue en coupe, présente la forme d'un godet, avec une tête (85) adjacente à la bouche et un collet (84) partant de celle-ci,
**caractérisé en ce que** le collet (84) de la pièce d'obturation (72) est traversé par au moins un trou radial (86), sachant que dans la position de repos de la pièce d'obturation (72), une communication d'écoulement entre le corps de base (71) et la pièce d'obturation (72) est fermée de manière étanche, tandis que dans la position de travail de la pièce d'obturation (72), cette liaison d'étanchéité est annulée et un écoulement libre à travers le raccord mâle (70) est rendu possible, entre le corps de base (71) et la pièce d'obturation (72), ainsi qu'à travers le trou radial (86), au nombre d'au moins un.

29. Raccord mâle selon la revendication 28, **caractérisé en ce que** le conduit d'écoulement est constitué d'un alésage traversant (76, 77).

30. Raccord mâle selon la revendication 28, **caractérisé en ce que** le raccord mâle (70) présente, sur l'extrémité d'insertion (79), une gorge annulaire (78) s'étendant sur la périphérie extérieure.

31. Raccord mâle selon la revendication 28, **caractérisé en ce qu'**il présente, dans l'extrémité d'insertion (79), un alésage (77) cylindrique comportant une gorge annulaire (81) périphérique, destinée à recevoir un joint d'étanchéité (82).

32. Raccord mâle selon la revendication 28, **caractérisé en ce que** la largeur intérieure de l'extrémité d'insertion (79) correspond au diamètre extérieur d'un manchon d'accouplement (5) d'un raccord femelle (1).

33. Raccord mâle selon la revendication 28, **caractérisé en ce que** le collet (84) présente un diamètre extérieur qui est supérieur à celui de la tête (85).

34. Raccord mâle selon la revendication 28, **caractérisé en ce que** le raccord mâle (70) comporte un filtre sur sa face arrière qui est éloignée de la bouche.

35. Raccord mâle selon la revendication 28, **caractérisé en ce que** le raccord mâle (70) est pourvu d'un filet de raccordement sur sa surface périphérique extérieure.
